# EUROPÄISCHE PATENTSCHRIFT

(11) **EP 3 189 105 B1**
(45) Veröffentlichungstag und Bekanntmachung des Hinweises auf die Patenterteilung: **28.06.2023**
(21) Anmeldenummer: 15775083.7
(22) Anmeldetag: 14.08.2015
(51) Int. Cl.: C09D 5/02, A01N 43/80, C09J 11/06

(54) **MIT 5-CHLOR-2-METHYL-4-ISOTHIAZOLIN-3-ON KONSERVIERTE PRODUKTE**
PRODUCTS PRESERVED WITH 5-CHLORO-2-METHYL-4-ISOTHIAZOLIN-3-ONE
PRODUITS CONSERVÉS AVEC DE LA 5-CHLORO-2-MÉTHYL-ISOTHIZAOLIN-3-ONE

(30) Priorität: 02.09.2014 EP 14003016
(43) Veröffentlichungstag der Anmeldung: 12.07.2017
(73) Patentinhaber: THOR GmbH, 67346 Speyer (DE)
(72) Erfinder: HAHN, Peter Erich, 68626 Lampertheim (DE); SCHMIDT, Hans-Jürgen, 67346 Speyer (DE); BAUM, Rüdiger, 68753 Waghäusel (DE); WUNDER, Thomas, 67435 Neustadt a.d. Weinstrasse (DE)
(74) Vertreter: Apenberg, Stefan
(86) Internationale Anmeldenummer: PCT/EP2015/001678
(87) Internationale Veröffentlichungsnummer: WO 2016/034266

(56) Entgegenhaltungen:
- EP-A1- 0 745 324
- EP-A1- 2 243 516
- DE-A1- 19 810 819
- US-A- 5 364 649
- US-A- 5 641 411
- COLLIER P J ET AL: "GROWTH INHIBITORY AND BIOCIDAL ACTIVITY OF SOME ISOTHIAZOLONE BIOCIDES", JOURNAL OF APPLIED BACTERIOLOGY, BLACKWELL PUBLISHING LTD., OXFORD, GB, Bd. 69, Nr. 4, 1. März 1990 (1990-03-01), Seiten 569-577, XP002925577, ISSN: 0021-8847
- P.J. COLLIER ET AL: "Chemical reactivity of some isothiazolone biocides", JOURNAL OF APPLIED BACTERIOLOGY, Bd. 69, Nr. 4, 1. Oktober 1990 (1990-10-01), Seiten 578-584, XP055104534, ISSN: 0021-8847, DOI: 10.1111/j.1365-2672.1990.tb01551.x

## Beschreibung

Die Erfindung betrifft die Verwendung einer Biozidzusammensetzung mit einem pH-Wert im Bereich von pH 1 bis pH 5, enthaltend: a) von 0,25 bis 20 Gew.-% Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, b) ein Lösemittel, und wenigstens einen Stabilisator ausgewählt aus der Gruppe c), d), e) und f): c) von 0,1 bis 25 Gew.-% eines Metallnitrats, d) von 0,1 bis 500 ppm Kupferionen (Cu²⁺), e) von 5 ppm bis 10.000 ppm eines Oxidationsmittels, f) von 5 ppm bis 1.000 ppm 2-Brom-2-nitropropan-1,3-diol und/oder Formaldehyd, zur Verminderung mikrobiellen Befalls eines Produktes, dadurch gekennzeichnet, dass das Produkt ausgewählt ist aus der Gruppe bestehend aus Farben, Innenraumfarben, Lacken, Lasuren, Putzen, Innenputzen, Polymeremulsionen, Latices, Polymerdispersionen, Ligninsulfonaten, Kreideaufschlämmungen, mineralischen Slurries, keramischen Massen, Klebstoffen, Dichtstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithografischen Flüssigkeiten, Verdickern, kosmetischen Produkten, Toilettenartikeln, Wasserkreisläufen, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

Technische, insbesondere wässrige Produkte, wie Farben, Lacke, Emulsionen und kosmetische Produkte werden üblicherweise unter Verwendung natürlicher oder biologisch abbaubarer Rohstoffe hergestellt. Diese Rohstoffe und das als Lösemittel verwendete Wasser sind dabei häufig mit Keimen, wie Bakterien, Hefen und Pilzen, belastet. Verzichtet man bei der Herstellung dieser Produkte auf eine Konservierung, so können diese bereits einen Tag nach der Herstellung hohe Keimzahlen aufweisen.

Um sicherzustellen, dass diese Produkte den hygienischen Anforderungen gerecht werden und damit die Haltbarkeit der technischen Produkte gewährleistet ist, werden den Produkten so genannte Biozide hinzugegeben. Eines dieser Biozide ist das 5-Chlor-2-methylisothiazolin-3-on (CMIT). Dieses weist eine gute biozide Wirkung auf, hat aber bei der praktischen Handhabung verschiedene Nachteile. Beispielsweise kann dies Verbindung bei Personen, die damit umgehen, Allergien auslösen.

Um die Nachteile dieses zwar äußerst wirksamen, aber auch mit Nachteilen für den Endanwender behafteten CMITs zu überwinden, kommt seit Anfang der 90er Jahre die in der EP 1 005 271 B1 offenbarte Mischung der Isothiazolinone 2-Methylisothiazolin-3-on (MIT) und 1,2-Benzisothiazolin-3-on (BIT) als Biozidzusammensetzung zum Einsatz. Diese Mischung wird von der Thor GmbH (Speyer, Bundesrepublik Deutschland) als Acticide^{®} MBS vertrieben und stellt zu heutiger Zeit den Standard bei der Gebindekonservierung von wasserbasierenden Farben und Putzen dar. Diese Biozidzusammensetzung hat den Vorteil, dass sie durch die gezielte Auswahl der beiden Isothiazolinone eine hohe Wirksamkeit mit einem im Vergleich zu dem 5-Chlor-2-methylisothiazolin-3-on deutlich geringen Sensibilisierungspotential vereint.

Trotz des Ausweichens auf Acticide^{®} MBS als Alternative zu dem 5-Chlor-2-methylisothiazolin-3-on ist in den mit Acticide^{®} MBS konservierten Produkten noch immer das MIT enthalten, welches bei Allergikern beziehungsweise bei Personen mit hohem Sensibilisierungsgrad Kontaktekzeme und auch aerogene Kontaktekzeme hervorrufen kann.

Aufgrund der eingangs geschilderten Umstände ist jedoch ein gänzlicher Verzicht auf wirksame Konservierungsmittel nicht möglich.

Eine mögliche Lösung, wird in der veröffentlichten deutschen Patentanmeldung DE 198 10 819 A1 vorgeschlagen. Dieses Dokument befasst sich mit einem Verfahren zur Herstellung von Beschichtungsmitteln, die für auf Isothiazolinone allergisch reagierende Personen geeignet sein sollen. Im Rahmen des Verfahrens werden die Beschichtungsmittel, in dem die Isothiazolinone enthalten sind, mit Reagenzien, wie Natriumthiosulfat versetzt, die durch chemische Reaktion das/die Isothiazolinone so zersetzen sollen, so dass für allergisch reagierende Personen unbedenkliche Folgeprodukte entstehen sollen.

Die U.S. Patentschrift US 5,364,649 befasst sich mit Zusammensetzungen, die (a) ein Isothiazolinon, (b) Kupferionen und (c) ein Alkanolamin, enthalten. Konkret befasst sich dieses Dokument mit dem stabilisierenden Effekt von Metallionen auf Isothiazolinone, insbesondere auf 5-Chlor-2-methylisothiazolin-3-on. Dabei wird ein gemischtes Methyl-Chlormethylisothiazolinon (IT) "mixed methyl- chloromethyl isothiazolone (IT)" mit Hilfe von Metallionen stabilisiert und die Stabilität des 5-Chlor-2-methylisothiazolin-3-ons analysiert.

Der wissenschaftliche Fachartikel von Collier et al. aus dem Jahre 1990 (Collier, P.J., Ramsey, A., Waigh, R.D., Douglas, K.T., Austin, P. & Gilbert, P. 1990. Chemical reactivity of some isothiazolone biocides. Journal of Applied Bacteriology69, 578-584) befasst sich mit der bioziden Wirksamkeit der einzelnen Isothiazolinone, wie 1,2-Benzothiazol-3-on (BIT), 5-Chlor-2-methylisothiazolin-3-on (CMIT) und 2-Methylisothiazolin-3-on (MIT). Die Verwendung einer stabilisierten Biozidzusammensetzung, mit einem pH-Wert im Bereich von pH 1 bis pH 5, die 0,25 bis 20 Gew.-% Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons enthält, zur Verminderung mikrobiellen Befalls eines Produktes, wird in diesem Artikel weder offenbart noch nahegelegt.

Die europäische Offenlegungsschrift EP 0 745 324 A1 aus dem Jahre 1996 betrifft die Stabilisierung von 5-Chlor-2-methyl-4-isothiazolin-3-on und 2-Methyl-4-isothiazolin-3-on in verdünnten wässrigen Lösungen. Dabei wird die Stabilisierung der damals gebräuchlichen 3 zu 1 Mischung aus 5-Chlor-2-methyl-4-isothiazolin-3-on und 2-Methyl-4-isothiazolin-3-on offenbart.

Nachteilig ist jedoch, dass nach dem beschriebenen Verfahren die Isothiazolinone, insbesondere das MIT nicht quantitativ bzw. irreversibel zerstört werden, wodurch diese in den Produkten und Folgeprodukten noch immer enthalten sind, und nach wie vor allergisch reagierenden Personen Probleme bereiten können, beziehungsweise bei Personen mit hohem Sensibilisierungsgrad Kontaktekzeme bzw. aerogene Kontaktekzeme hervorrufen können. So konnte im Rahmen von den Erfindern durchgeführten Versuchen gezeigt werden, dass beispielsweise in einer wässrigen Dispersionsfarbe enthaltenes 2-Methylisothiazolin-3-on mit Hilfe von Natriumthiosulfat weder quantitativ noch irreversibel zerstört werden konnte.

Es ist daher Aufgabe der Erfindung ist es, ein Verfahren zur Verfügung zu stellen, mit Hilfe dessen Produkte hergestellt werden können, die auch für auf 5-Chlor-2-methylisothiazolin-3-on bzw. 2-Methylisothiazolin-3-on allergisch reagierende Personen, beziehungsweise für Personen mit hohem Sensibilisierungsgrad gegenüber 5-Chlor-2-methylisothiazolin-3-on und 2-Methylisothiazolin-3-on geeignet sind. Dabei soll im Rahmen dieses Verfahrens auf den Einsatz von 5-Chlor-2-methylisothiazolin-3-on nicht verzichtet werden.

Gelöst wird diese Aufgabe durch die Verwendung einer Biozidzusammensetzung mit einem pH-Wert im Bereich von pH 1 bis pH 5, enthaltend:
a) von 0,25 bis 20 Gew.-% Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons,
b) ein Lösemittel, und
   wenigstens einen Stabilisator ausgewählt aus der Gruppe c), d), e) und f):
      c) von 0,1 bis 25 Gew.-% eines Metallnitrats
      d) von 0,1 bis 500 ppm Kupferionen (Cu²⁺)
      e) von 5 ppm bis 10.000 ppm eines Oxidationsmittels
      f) von 5 ppm bis 1.000 ppm 2-Brom-2-nitropropan-1,3-diol und/oder Formaldehyd,
   zur Verminderung mikrobiellen Befalls eines Produktes, dadurch gekennzeichnet, dass das Produkt ausgewählt ist aus der Gruppe bestehend aus Farben, Innenraumfarben, Lacken, Lasuren, Putzen, Innenputzen, Polymeremulsionen, Latices, Polymerdispersionen, Ligninsulfonaten, Kreideaufschlämmungen, mineralischen Slurries, keramischen Massen, Klebstoffen, Dichtstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithografischen Flüssigkeiten, Verdickern, kosmetischen Produkten, Toilettenartikeln, Wasserkreisläufen, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

Diese Produkte zeichnen sich vorteilhafterweise dadurch aus, dass das in diesen enthaltene 5-Chlor-2-methyl-4-isothiazolin-3-on auf einfache, dem Fachmann bekannte Art und weise zersetzt werden kann, so dass daraus (End-)Produkte erhalten werden können, die frei von 5-Chlor-2-methylisothiazolin-3-on und 2-Methylisothiazolin-3-on sind. Derartige Produkte sind insbesondere für Personen mit einem hohem Sensibilisierungsgrad gegenüber 5-Chlor-2-methylisothiazolin-3-on bzw. 2-Methylisothiazolin-3-on geeignet.

Das Konzept der vorliegenden Erfindung ermöglicht es daher, unter Verwendung des äußerst wirksamen 5-Chlor-2-methylisothiazolin-3-ons, die genannten Produkte während der Herstellung zu konservieren, und vor dem Inverkehrbringen so zu behandeln, dass in dem Endprodukt kein 5-Chlor-2-methylisothiazolin-3-on mehr enthalten ist, welches Personen mit einem hohem Sensibilisierungsgrad gegenüber 5-Chlor-2-methylisothiazolin-3-on Probleme bereiten könnte. Die Verwendung von 5-Chlor-2-methylisothiazolin-3-on während der Herstellung der Produkte hat den Vorteil, dass mit Hilfe dieses sehr wirkungsvollen Breitbandbiozids die durch die einzelnen Bestandteile der jeweiligen Produkte eingeschleppten Mikroorganismen wirkungsvoll inaktiviert werden können, so dass nach der gezielten Zerstörung des 5-Chlor-2-methylisothiazolin-3-ons nahezu sterile Produkte erhalten werden, die mit Hilfe von Bioziden nachkonserviert werden können, welche bevorzugt die eingangs beschriebenen Nachteile nicht aufweisen.

Der Begriff "Produkt" bedeutet im Sinne der Vorliegenden Erfindung die vorstehend aufgezählten Produkte bzw. Systeme ausgewählt aus der Gruppe bestehend aus Farben, Innenraumfarben, Lacken, Lasuren, Putzen, Innenputzen, Emulsionen, Latices, Polymerdispersionen, Ligninsulfonaten, Kreideaufschlämmungen, mineralischen Slurries, keramischen Massen, Klebstoffen, Dichtstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithografischen Flüssigkeiten, Verdickern, kosmetischen Produkten, Toilettenartikeln, Wasserkreisläufen, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen. Unter dem Begriff "Produkt" sind dabei sowohl End- als auch Zwischenprodukte zu verstehen. Gemäß einer besonders bevorzugten Ausführungsform der Erfindung ist das Produkt eine Polymeremulsion oder das Vorprodukt einer Innenraumfarbe oder eines Innenputzes. Vorprodukt bedeutet dabei, dass diese Produkte vor Inverkehrbringen derart behandelt werden, dass das in den Produkten enthaltene 5-Chlor-2-methylisothiazolin-3-on idealerweise quantitativ zersetzt wird.

Gemäß einer bevorzugten Ausführungsform der Erfindung enthält das Produkt 5-Chlor-2-methylisothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, in einer Menge, bezogen auf das Produkt, im Bereich von 1 ppm bis 100 ppm, bevorzugt im Bereich von 5 ppm bis 50 ppm, besonders bevorzugt im Bereich von 5 ppm bis 30 ppm.

Die großtechnische Herstellung von 5-Chlor-2-methylisothiazolin-3-on bzw. 2-Methylisothiazolin-3-on ist bekannt und kann auf verschiedenen Wegen erfolgen, die allesamt ein Gemisch von 5-Chlor-2-methylisothiazolin-3-on und 2-Methylisothiazolin-3-on liefern. Beispielsweise beschreibt U.S.3,849,430 A zwei Alternativen, die ein Gemisch aus 5-Chlor-2-methylisothiazolin-3-on bzw. 2-Methylisothiazolin-3-on liefern. Wie eingangs beschrieben, lässt sich das in dem Gemisch aus 5-Chlor-2-methylisothiazolin-3-on und 2-Methylisothiazolin-3-on enthaltene 2-Methylisothiazolin-3-on nicht ohne weiteres zerstören, so dass mit 2-Methylisothiazolin-3-on konservierte (End)Produkte Allergikern, bzw. Personen mit einem hohem Sensibilisierungsgrad gegenüber 2-Methylisothiazolin-3-on Probleme bereiten können. Eine Möglichkeit, diese Problematik zu Umgehen wäre ein gänzlicher Verzicht auf den Einsatz des 2-Methylisothiazolin-3-on enthaltenden 5-Chlor-2-methylisothiazolin-3-ons.

Die Vorliegende Erfindung ermöglicht jedoch den weiteren Einsatz von 5-Chlor-2-methylisothiazolin-3-on, in Form eines völlig neuartigen Gemisches, welches das 2-Methyl-4-isothiazolin-3-on im Bereich von 0 bis 2 Gew.-%, bezogen auf den Gesamtanteil des 5-Chlor-2-methyl-4-isothiazolin-3-ons, bevorzugt im Bereich von 0 bis 1 Gew.-%, jeweils bezogen auf den Gesamtanteil des 5-Chlor-2-methyl-4-isothiazolin-3-ons, enthält.

Gemäß einer Ausführungsform der Erfindung sind die Produkte dadurch gekennzeichnet, dass sie weniger als 1 ppm, bevorzugt weniger als 0,1 ppm, besonders bevorzugt 0,01 ppm 2-Methyl-4-isothiazolin-3-on, jeweils bezogen auf das Produkt, enthalten. Das in den Produkten enthaltene 2-Methyl-4-isothiazolin-3-on kann dabei durch Zugabe des 5-Chlor-2-methyl-4-isothiazolin-3-ons, das das 2-Methyl-4-isothiazolin-3-on im Bereich von 0 bis 2 Gew.-% enthält in das Produkt eingebracht worden sein. Gemäß einer alternativen Ausführungsform der Erfindung kann das 2-Methyl-4-isothiazolin-3-on jedoch auch über andere Bestandteile der Produkte eingetragen worden sein, beispielsweise über mit 2-Methyl-4-isothiazolin-3-on konservierte Produktbestandteile.

Wie vorstehend beschrieben, liefert die großtechnische Herstellung von 5-Chlor-2-methylisothiazolin-3-on bzw. 2-Methylisothiazolin-3-on immer ein Gemisch aus 5-Chlor-2-methylisothiazolin-3-on und 2-Methylisothiazolin-3-on. Während 2-Methylisothiazolin-3-on-enthaltende Biozidzusammensetzungen mit einem geringen Anteil an 5-Chlor-2-methylisothiazolin-3-on kommerziell erhältlich sind, sind 5-Chlor-2-methyl-4-isothiazolin-3-on Zusammensetzungen mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons nicht kommerziell erhältlich.

Ein Fachmann kann 5-Chlor-2-methyl-4-isothiazolin-3-on-Zusammensetzungen mit dem erfindungsgemäß geforderten geringen Anteil an 2-Methyl-4-isothiazolin-3-on, aus Gemischen von 5-Chlor-2-methylisothiazolin-3-on und 2-Methylisothiazolin-3-on mit Hilfe ihm bekannter Trennverfahren, wie Chromatographie, Extraktion bzw. fraktionierter Fällung herstellen. Der Fachmann kann die Reinheit des 5-Chlor-2-methyl-4-isothiazolin-3-ons bzw. dessen Gehalt in den entsprechenden Produkten mit Hilfe ihm bekannter Methoden, beispielsweise mittels quantitativer HPLC bestimmen.

Da das erfindungsgemäße Produkt insbesondere für Allergiker, bzw. für Personen mit einem hohem Sensibilisierungsgrad gegenüber 5-Chlor-2-methylisothiazolin-3-on bzw. 2-Methylisothiazolin-3-on konzipiert ist, ist das Produkt bevorzugt ausgewählt aus der Gruppe bestehend aus Innenraumfarben, Innenputzen, Polymerdispersionen und kosmetischen Produkten. Vorteilhafterweise lassen sich aus diesen Produkten Endprodukte herstellen, die weder 5-Chlor-2-methylisothiazolin-3-on noch 2-Methylisothiazolin-3-on enthalten, und somit für Allergiker, bzw. Personen mit einem hohem Sensibilisierungsgrad gegenüber 5-Chlor-2-methylisothiazolin-3-on bzw. 2-Methylisothiazolin-3-on geeignet sind.

Gemäß einer weiteren Ausführungsform der Erfindung handelt es sich bei dem Produkt um ein Produkt auf Wasserbasis. Der Wassergehalt, liegt dabei allgemein im Bereich von 5 bis 99,9 Gew.-%.

Unter "zur Verminderung mikrobiellen Befalls eines Produktes" ist im Sinne der Erfindung zu verstehen, dass durch Einbringen einer Menge 5-Chlor-2-methyl-4-isothiazolin-3-ons mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, in das Produkt das mikrobielle Wachstum der in den Produkten enthaltenen Mikroorganismen nachweislich verlangsamt bzw. gänzlich unterbunden wird.

Die Menge an 5-Chlor-2-methyl-4-isothiazolin-3-on, das in die jeweiligen Produkte eingebracht wird, liegt allgemein, bezogen auf das Produkt, im Bereich von 1 ppm bis 100 ppm, bevorzugt im Bereich von 5 ppm bis 50 ppm, besonders bevorzugt im Bereich von 5 ppm bis 30 ppm.

Auf vorteilhafte Art und Weise ermöglicht die erfindungsgemäße Verwendung von 5-Chlor-2-methyl-4-isothiazolin-3-on mit dem vorstehend definierten Gehalt an 2-Methyl-4-isothiazolin-3-on konservierte Produkte zu erhalten, deren Konservierungsmittel zu jedem gewünschten Zeitpunkt auf einfache Art und Weise gezielt zersetzt werden kann, das dass hierdurch (End)-Produkte erhalten werden können, die frei von 5-Chlor-2-methyl-4-isothiazolin-3-on und auch 2-Methyl-4-isothiazolin-3-on sind.

Die vorliegende Erfindung betrifft die Verwendung einer Biozidzusammensetzung zur Verminderung mikrobiellen Befalls eines Produktes.

Die Biozidzusammensetzung ist dabei dadurch gekennzeichnet, dass sie die folgenden Komponenten enthält:
a) 0,25 bis 20 Gew.-%, besonders bevorzugt 0,25 bis 2 Gew.-% Chlor-2-methyl-4-isothiazolin-3-on mit einem Gehalt an 2-Methyl-4-isothiazolin-3-on im Bereich von 0 bis 2 Gew.-%, bevorzugt mit einem Gehalt an 2-Methyl-4-isothiazolin-3-on im Bereich von 0 bis 1 Gew.-%, bezogen auf den Gesamtanteil des 5-Chlor-2-methyl-4-isothiazolin-3-ons und
b) ein Lösemittel.

Die Biozidzusammensetzung hat dabei einen pH-Wert im Bereich von pH 1 bis 5, bevorzugt im Bereich von pH 2 bis 4.

Die Biozidzusammensetzung umfasst weiterhin wenigstens einen Stabilisator ausgewählt aus der Gruppe c), d), e) und f):
c) von 0,1 bis 25 Gew.-% eines Metallnitrats
d) von 0,1 bis 500 ppm Kupferionen (Cu²⁺)
e) von 5 ppm bis 10.000 ppm eines Oxidationsmittels
f) von 5 ppm bis 1.000 ppm 2-Brom-2-nitropropan-1,3-diol und/oder Formaldehyd.

Gemäß einer bevorzugten Ausführungsform der Erfindung ist das Lösemittel b) ein polares Lösemittel, bevorzugt Wasser.

Bei dem Metallnitrat, das als Stabilisator c) in der Biozidzusammensetzung in einer Menge, bezogen auf die gesamte Biozidzusammensetzung, von 0,01 bis 25 Gew.-%, bevorzugt in einer Menge von 2 bis 10 Gew.-% enthalten sein kann handelt es sich bevorzugt um ein Nitratsalz eines Alkalimetalls oder Erdalkalimetalls. Bevorzugt handelt es sich bei dem Metall um Lithium, Natrium, Kalium, Magnesium, Calcium oder Mischungen dieser Metalle. Besonders bevorzugt handelt es sich bei dem Metallnitrat um Magnesiumnitrat und oder Natriumnitrat.

Bei den Kupferionen, die als Stabilisator d) in der Biozidzusammensetzung in einer Menge, bezogen auf die gesamte Biozidzusammensetzung, im Bereich von 0,1 bis 500 ppm, bevorzugt 1 bis 10 ppm enthalten sein können, handelt es sich um Kupfer(II)-Ionen. Gemäß einer bevorzugten Ausführungsform der Erfindung werden diese über Kupfer(II)nitrat und/oder Kupfer(II)sulfat in die Biozidzusammensetzung eingebracht.

Bei dem wenigstens einen Oxidationsmittel, das als Stabilisator e) in der Biozidzusammensetzung in einer Menge, bezogen auf die gesamte Biozidzusammensetzung, im Bereich von 5 bis 10.000 ppm, bevorzugt im Bereich von 10 bis 2000 ppm, besonders bevorzugt im Bereich von 10 bis 50 ppm enthalten sein kann, handelt es sich allgemein um wenigstens ein Oxidationsmittel, das ausgewählt ist aus der Gruppe: Wasserstoffperoxid, Iodat, Periodat, Perchlorat, Chlorat, Bromat, bzw. die entsprechend abgeleiteten Halogensauerstoffsäuren, organische Oxidationsmittel, wobei Wasserstoffperoxid, Iodat, Periodat und Bromat bevorzugt und Iodat besonders bevorzugt ist. Die genannten Oxidationsmittel können in die Biozidzusammensetzung in an sich bekannter Weise beispielsweise in Form ihrer Alkalimetallsalze eingebracht werden.

Als Stabilisator f) kann die Biozidzusammensetzung auch Formaldehyd und/oder 2-Brom-2-nitropropan-1,3-diol in einer Menge, bezogen auf die gesamte Biozidzusammensetzung, im Bereich von 5 bis 1.000 ppm, bevorzugt im Bereich von 10 bis 200 ppm enthalten. Formaldehyd kann dabei auch in Form eines so genannten Formaldehydabspalters in die Biozidzusammensetzung eingebracht werden.

"Enthaltend wenigstens einem Stabilisator ausgewählt aus der Gruppe c), d), e) und f)" bedeutet im Sinne der vorliegenden Erfindung, dass die Biozidzusammensetzung neben den Komponenten a,) dem Chlor-2-methyl-4-isothiazolin-3-on und Komponente b) dem Lösemittel einen oder mehrere Stabilisatoren aus den Gruppen c), d), e) und f) enthält.

Die Biozidzusammensetzungen liegen vorzugsweise in flüssiger Form vor. Der Begriff "flüssig" bedeutet in diesem Zusammenhang, dass die Biozidzusammensetzung bei Raumtemperatur im flüssigen Aggregatzustand vorliegt und der Gehalt an ungelösten Bestandteilen 0 bis 1 Gew.-%, bevorzugt 0 bis 0,5 Gew.-% beträgt. Besonders bevorzugt sind die flüssigen Biozidzusammensetzungen frei von ungelösten Bestandteilen.

Gemäß einer bevorzugten Ausführungsform der vorliegenden Erfindung ist die Biozidzusammensetzung dadurch gekennzeichnet, dass sie einen pH-Wert im Bereich von pH 1 bis 5, bevorzugt im Bereich von pH 2 bis 4 aufweist, und die folgenden Komponenten enthält, beziehungsweise aus den folgenden Komponenten besteht:
a) von 0,25 bis 2 Gew.-% Chlor-2-methyl-4-isothiazolin-3-on mit einem Gehalt an 2-Methyl-4-isothiazolin-3-on im Bereich von 0 bis 2 Gew.-%, bevorzugt mit einem Gehalt an 2-Methyl-4-isothiazolin-3-on,
b) von 98 bis 99,74 Gew.-% Wasser,
   und wenigstens einen Stabilisator ausgewählt aus der Gruppe d) und e):
d) von 0,1 bis 20 ppm Kupfer(II)Ionen
e) von 5 ppm bis 10.000 ppm eines Oxidationsmittels.

Wie bereits vorstehend beschrieben, wird die Biozidzusammensetzung in einer solchen Menge den zu konservierenden Produkten hinzugegeben, dass die Menge an 5-Chlor-2-methyl-4-isothiazolin-3-on, die das in die jeweiligen Produkte eingebracht wird, bezogen auf das Produkt, im Bereich von 1 ppm bis 100 ppm, bevorzugt im Bereich von 5 ppm bis 50 ppm, besonders bevorzugt im Bereich von 5 ppm bis 30 ppm liegt.

Die vorliegende Erfindung betrifft weiterhin ein Verfahren zur Verminderung mikrobiellen Befalls eines Produktes umfassend die Schritte:
(A) Bereitstellen eines Produktes mit einem Gehalt an 2-Methyl-4-isothiazolin-3-on im Bereich von 0 bis 1 ppm, und
(B) Hinzugeben von 1 bis 100 ppm 5-Chlor-2-methyl-4-isothiazolin-3-on mit einem Gehalt an 2-Methyl-4-isothiazolin-3-on im Bereich von 0 bis 2 Gew.-%, bevorzugt 0 bis 1 Gew.%, bezogen auf den Gesamtanteil des 5-Chlor-2-methyl-4-isothiazolin-3-ons.

"Verminderung mikrobiellen Befalls eines Produktes" ist im Sinne des erfindungsgemäßen Verfahrens so zu verstehen, dass durch Einbringen einer Menge 5-Chlor-2-methyl-4-isothiazolin-3-ons mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons, in das zu konservierende Produkt das mikrobielle Wachstum der in den Produkten enthaltenen Mikroorganismen nachweislich verlangsamt bzw. gänzlich unterbunden wird.

Das Produkt, das in Verfahrensschritt (A) bereitgestellt wird, ist allgemein dadurch gekennzeichnet, dass es einen Gehalt an 2-Methyl-4-isothiazolin-3-on im Bereich von 0 bis 1 ppm, bezogen auf das Produkt aufweist. Gemäß einer bevorzugten Ausführungsform der Erfindung weist das in Verfahrensschritt (A) bereitgestellte Produkt einen Gehalt an 2-Methyl-4-isothiazolin-3-on im Bereich von 0,1 ppm bis 0 ppm auf, gemäß einer besonders bevorzugten Ausführungsform von 0 ppm. Bedingt durch den vernachlässigbar geringen Gehalt an 2-Methyl-4-isothiazolin-3-on in dem bereitgestellten Produkt lassen sich mit Hilfe des erfindungsgemäßen Verfahrens unter Verwendung von 5-Chlor-2-methyl-4-isothiazolin-3-on mit dem vorstehend definierten Gehalt an 2-Methyl-4-isothiazolin-3-on konservierte Produkte erhalten, deren Konservierungsmittel zu jedem gewünschten Zeitpunkt auf einfache Art und Weise gezielt zersetzt werden kann, das dass hierdurch (End)-Produkte erhalten werden können, die frei von 5-Chlor-2-methyl-4-isothiazolin-3-on und 2-Methyl-4-isothiazolin-3-on sind.

Das Produkt, das in Verfahrensschritt (A) bereitgestellt wird, ist allgemein ausgewählt aus der Gruppe bestehend aus Farben, Innenraumfarben, Lacken, Lasuren, Putzen, Gemäß einer bevorzugten Ausführungsform wird in einem weiteren Verfahrensschritt das hinzugegebene 5-Chlor-2-methyl-4-isothiazolin-3 mit Hilfe wenigstens einer 5-Chlor-2-methyl-4-isothiazolon-zersetzenden Verbindung zersetzt.

Bevorzugt wird das 5-Chlor-2-methyl-4-isothiazolon dabei derart abgebaut bzw. zersetzt, so dass der Gehalt an 5-Chlor-2-methyl-4-isothiazolon in dem Produkt innerhalb eines Zeitraums von weniger als 24 Stunden nach Zugabe der wenigstens einen 5-Chlor-2-methyl-4-isothiazolon-zersetzenden Verbindung, bezogen auf das gesamte Produkt, nur noch in einem Bereich von 0 bis 0,5 ppm, bevorzugt im Bereich von 0 bis 0,1 ppm liegt.

"Zersetzung des 5-Chlor-2-methyl-4-isothiazolons" bedeutet im Rahmen der vorliegenden Erfindung, dass das 5-Chlor-2-methyl-4-isothiazolon innerhalb eines Zeitraums von bis zu 24 Stunden, bevorzugt innerhalb eines Zeitraums von 0,5 bis 12 Stunden, besonders bevorzugt innerhalb eines Zeitraums von 2 bis 6 Stunden, irreversibel zersetzt beziehungsweise abgebaut wird, so dass nach diesem Zeitraum der Gehalt an 5-Chlor-2-methyl-4-isothiazolon, bezogen auf das Produkt, im Bereich von 0 bis 0,5 ppm, besonders bevorzugt im Bereich von 0 bis 0,1 ppm liegt.

Innerhalb eines Zeitraums von bis zu 24 Stunden bedeutet dabei, dass das 5-Chlor-2-methyl-4-isothiazolon, das in Verfahrensschritt (C) hinzugegeben wurde innerhalb von 24 Stunden ab dem Zeitpunkt des Kontakts mit der wenigstens einen 5-Chlor-2-methyl-4-isothiazolon-zersetzenden Verbindung zersetzt wird, so das der Gesamtgehalt an 5-Chlor-2-methyl-4-isothiazolon nach diesen 24 Stunden im Bereich von 0 bis 0,5 ppm, bezogen auf das Produkt, liegt.

Mittel zur Zersetzung des 5-Chlor-2-methyl-4-isothiazolons bedeutet im Rahmen der vorliegenden Erfindung eine Verbindung, die durch chemische Reaktion das 5-Chlor-2-methyl-4-isothiazolon zersetzt bzw. inaktiviert. Das Mittel zur Zersetzung des 5-Chlor-2-methyl-4-isothiazolons bewirkt dabei, dass das in dem Produkt enthaltene 5-Chlor-2-methyl-4-isothiazolon innerhalb der vorstehend definierten Zeiträume auf den Gehalt im Bereich von 0 bis 0,5 ppm reduziert wird. Derartige Mittel bzw. Verbindungen sind dem Fachmann bekannt. Diese auszuwählen ist daher übliches fachmännisches Tun.

Gemäß einer bevorzugten Ausführungsform der Erfindung handelt es sich bei dem Mittel zur Zersetzung des 5-Chlor-2-methyl-4-isothiazolons um wenigstens eine Thiolverbindung.

Gemäß einer besonders bevorzugten Ausführungsform der Erfindung handelt es sich bei dem eingesetzten Mittel zur Zersetzung des 5-Chlor-2-methyl-4-isothiazolons um wenigstens eine Verbindung, die ausgewählt ist aus der Gruppe bestehend aus Cystein, Mercaptoethanol, Mercaptopropionsäure, Methylmercaptopropionat, Glutathion, Thioglycolat, Natriumthiosulfat, Natriumbisulfit, Pyrithion, Mercaptopyridin, Dithiothreitol, Mercaptoethansulfonat, und Natrium Formaldehyd Sulfoxylat. Gemäß einer besonders bevorzugten Ausführungsform der Erfindung handelt es sich bei dem Mittel zur Zersetzung des 5-Chlor-2-methyl-4-isothiazolons um Cystein.

Die Menge, der zur Zersetzung des 5-Chlor-2-methyl-4-isothiazolons verwendeten Verbindung(en) bzw. deren molares Verhältnis zu dem in den Produkten enthaltenen 5-Chlor-2-methyl-4-isothiazolon kann über weite Bereiche hinweg variieren. Üblicherweise liegt das molare Verhältnis des 5-Chlor-2-methyl-4-isothiazolons zu der wenigstens einen Verbindung mit der dies zersetzt wird im Bereich von 20:1 bis 1:20, bevorzugt im Bereich von 5:1 bis 1:5, besonders bevorzugt im Bereich von 2:1 bis 1:2.

Gemäß einer bevorzugten Ausführungsform der Erfindung ist das erfindungsgemäße Verfahren dadurch gekennzeichnet, dass zur Zersetzung des 5-Chlor-2-methyl-4-isothiazolons Cystein in einer Menge im Bereich von 1 bis 200 ppm, bevorzugt 5 bis 25 ppm, bezogen auf das Produkt verwendet wird.

Gemäß einer bevorzugten Ausführungsform der Erfindung handelt es sich bei dem Mittel zur Zersetzung des 5-Chlor-2-methyl-4-isothiazolons um wenigstens einen Zinkkomplex des Cysteins.

Die vorliegende Erfindung betrifft somit ebenfalls ein Verfahren, im Rahmen dessen in Verfahrensschritt (C) zum Zersetzen des 5-Chlor-2-methyl-4-isothiazolons eine Zusammensetzung enthaltend bzw. bestehend aus:
(A) 0,1 bis 20 Gew.-%, bevorzugt 2 bis 10 Gew.-% Cystein,
(B) 0,1 bis 10 Gew.-%, bevorzugt 2 bis 10 Gew.-% einer in Wasser löslichen Zinkverbindung,
(C) 0 bis 20 Gew.-% Zinkoxyd und/oder Zinkcarbonat, und
(D) 55 bis 99,8 Gew.-% Wasser verwendet bzw. eingesetzt wird.

Gemäß einer Ausführungsform enthält die Zusammensetzung die Komponenten (A), (B), (C) und (D), was heißt, dass neben diesen auch weitere Komponenten, wie Entschäumer, Dispergierhilfsmittel, Biozide und Verdicker enthalten sein dürfen. Gemäß einer alternativen Ausführungsform der Erfindung enthält die Zusammensetzung ausschließlich die Komponenten (A), (B), (C) und (D) bzw. nur die Komponenten (A), (B) und (D) in den angegebenen Bereichen.

Die in Wasser lösliche Zinkverbindung ist dabei ausgewählt aus der Gruppe bestehend aus Zinkchlorid, Zinkacetat, Zinkbenzoat, Zinktartrat, Zinkformiat, Zinkgluconat, Zinklactat, Zinklaurat, Zinkmaleat, Zinknitrat und Zinksulfat. Gemäß einer bevorzugten Ausführungsform handelt es sich bei der in Wasser löslichen Zinkverbindung um Zinksulfat und/oder Zinkchlorid, besonders bevorzugt um Zinkchlorid.

Gemäß einer bevorzugten Ausführungsform wird die wenigstens eine in Wasser lösliche Zinkverbindung in äquimolarer Menge zu dem Cystein eingesetzt.

Der pH-Wert der vorstehend beschriebenen Zusammensetzungen liegt allgemein im Bereich von 2,5 bis 5,0 bevorzugt im Bereich von 3,5 bis 4,5. Ein Fachmann kann den pH-Wert der Zusammensetzungen mit Hilfe geeigneter Mittel, wie Salzsäure einstellen. Gemäß einer bevorzugten Ausführungsform enthält die vorstehend beschriebene Zusammensetzung, bzw. besteht aus:
(A) 0,1 bis 5 Gew.-%, bevorzugt 2 Gew.-% Cystein,
(B) 0,1 bis 5 Gew.-%, bevorzugt 2 Gew.-% einer in Wasser löslichen Zinkverbindung, bevorzugt Zinkchlorid, und
(C) 90 bis 99,8 Gew.-% Wasser.

Gemäß einer alternativen bevorzugten Ausführungsform enthält die vorstehend beschriebene Zusammensetzung, bzw. besteht aus:
(A) 5 bis 20 Gew.-%, bevorzugt 10 Gew.-% Cystein,
(B) 0,1 bis 10 Gew.-%, bevorzugt 6 Gew.-% einer in Wasser löslichen Zinkverbindung, bevorzugt Zinkchlorid,
(C) 1 bis 20 Gew.-%, bevorzugt 5 Gew.-% Zinkoxyd, und
(D) 55 bis 93,8 Gew.-% Wasser.

Die vorstehend beschriebenen Zusammensetzungen, zeichnen sich durch gute Dosierbarkeit und Lagerstabilität aus, und sind ferner hinsichtlich der Abspaltung von Schwefelwasserstoff optimiert.

Nach der Zersetzung des 5-Chlor-2-methyl-4-isothiazolin-3-ons in Verfahrensschritt (C) ist das Produkt zwar idealerweise frei von mikrobiellem Befall, aber möglicherweise aufgrund des nun fehlenden Konservierungsmittels noch nicht gegen neu eingetragene Keime geschützt. Gemäß einer Ausführungsform der Erfindung wird im Rahmen des erfindungsgemäßen Verfahrens der pH-Wert in dem zu konservierenden Produkt auf einen pH-Wert im Bereich von 9,5 bis 12, bevorzugt auf einen pH-Wert im Bereich von 11 bis 12 eingestellt. Die Einstellung des pH-Wertes erfolgt bevorzugt durch Zugabe von NaOH und/oder KOH. Im Falle einer Dispersionsfarbe konnte die Anmelderin zeigen, dass diese nach der Zersetzung des 5-Chlor-2-methyl-4-isothiazolin-3-ons und Einstellung des pH-Wertes auf einen pH-Wert im Bereich von 9,5 bis 12 eine Lagerstabilität von mindestens 6 Monaten besitzt.

Gemäß einer weiteren bevorzugten Ausführungsform umfasst das erfindungsgemäße Verfahren als weiteren Verfahrensschritt, Verfahrensschritt (D) das Hinzugeben eines weiteren Biozids.

Die Erfindung betrifft daher ebenfalls ein Verfahren zur Verminderung mikrobiellen Befalls eines Produktes umfassend die Schritte:
(A) Bereitstellen eines Produktes mit einem Gehalt an 2-Methyl-4-isothiazolin-3-on im Bereich von 0 bis 1 ppm,
(B) Hinzugeben von 5 bis 100 ppm 5-Chlor-2-methyl-4-isothiazolin-3-on mit einem Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons,
(C) Zersetzen des 5-Chlor-2-methyl-4-isothiazolin-3-ons mit Hilfe wenigstens einer 5-Chlor-2-methyl-4-isothiazolon-zersetzenden Verbindung und
(D) Hinzugeben eines weiteren Biozids.

Das in Verfahrensschritt (D) hinzugegebene Biozid dient der Nachkonservierung der ursprünglich mit 5-Chlor-2-methyl-4-isothiazolin-3-on konservierten Produkte. Durch die Zersetzung des 5-Chlor-2-methyl-4-isothiazolin-3-ons in Verfahrensschritt (C) sind die Produkte zwar idealerweise frei von mikrobiellem Befall, aber möglicherweise aufgrund des nun fehlenden Konservierungsmittels noch nicht ausreichend gegen neu eingetragene Keime geschützt. Um diesen Schutz zu gewährleisten wird in Verfahrensschritt (D) wenigstens ein weiteres Biozid zugegeben, welches der Fachmann aufgrund seines allgemeinen Fachwissens in Abhängigkeit von dem nachzukonservierenden Produkt auswählt. Auch die Einsatzmenge des wenigstens einen in Verfahrensschritt (D) hinzugegebenen Biozids kann der Fachmann aufgrund seines allgemeinen Fachwissens bestimmen.

Gemäß einer bevorzugten Ausführungsform der Erfindung ist das Verfahren dadurch gekennzeichnet, dass das in Verfahrensschritt (D) hinzugegebene Biozid wenigstens eines ist, das ausgewählt ist aus der Gruppe bestehend aus 1,2-Benzisothiazolin-3-on, 2-Brom-2-nitropropan-1,3-diol, Zink-2-mercaptopyridin-N-oxid, einer Silberquelle, einer Zinkquelle, und 2,2-Dibrom-3-nitrilpropionamid.

Zink- oder Silberquelle bedeutet dabei Verbindungen bestehend aus Zink- oder Silbersalzen, Zink- Silberoxiden, Zink- oder Silberhydroxiden, Zink- oder Silbersulfaten, Zink- oder Silberchloriden, Zink- oder Silbermetallen, Zink- oder Silberkomplexen und Kombinationen davon. Bevorzugte Zinkquellen sind dabei ausgewählt aus der Gruppe bestehend aus Zinkacetat, Zinkoxid, Zinkcarbonat, Zinkchlorid, Zinksulfat, Zinkhydroxid, Zinkcitrat, Zinkfluorid, Zinkiodid, Zinklactat, Zinkoleat, Zinkoxalat, Zinkphosphat, Zinkpropionat, Zinksalicylat, Zinkselenat, Zinksilicat, Zinkstearat, Zinksulfid, Zinktannat, Zinktartrat, Zinkglukonat, Zinkundecylat und aus Kombinationen davon. Bevorzugte Silberquellen sind dabei ausgewählt aus der Gruppe bestehend aus Silberbromid, Silberchlorid, Silberzitrat, Silberiodid, Silberlactat, Silbernitrat, Silberoxid und aus Kombinationen davon.

Gemäß einer bevorzugten Ausführungsform wird in Verfahrensschritt (D) als Biozid eine Kombination aus einer Silberquelle und 1,2-Benzisothiazolin-3-on hinzugegeben. Gemäß einer noch mehr bevorzugten Ausführungsform wird in Verfahrensschritt (D) als Biozid eine Kombination aus Silberquelle, Zinkquelle und 1,2-Benzisothiazolin-3-on hinzugegeben. Die Einsatzmenge der vorstehend definierten Zusammensetzungen kann über weite Bereiche hinweg variieren. Ein Fachmann kann diese aufgrund seines allgemeinen Fachwissens ohne erfinderisches Zutun bestimmen.

Gemäß einer alternativen, bevorzugten Ausführungsform wird in Verfahrensschritt (D) als Biozid eine Kombination aus 1,2-Benzisothiazolin-3-on und einer Pyrithionverbindung, wie Zink-2-mercaptopyridin-N-oxid (Zinkpyrithion) hinzugegeben. Weiterhin bevorzugt wird zudem eine Zinkquelle, wie Zinkoxid hinzugegeben. Die Einsatzmenge der vorstehend definierten Zusammensetzungen kann über weite Bereiche hinweg variieren. Ein Fachmann kann diese aufgrund seines allgemeinen Fachwissens ohne erfinderisches Zutun bestimmen.

Gemäß einer alternativen, bevorzugten Ausführungsform wird in Verfahrensschritt (D) als Biozid eine Kombination aus einer Silberquelle, 1,2-Benzisothiazolin-3-on und einer Pyrithionverbindung, wie Zink-2-mercaptopyridin-N-oxid (Zinkpyrithion) hinzugegeben. Die Einsatzmenge der vorstehend definierten Zusammensetzungen kann über weite Bereiche hinweg variieren. Ein Fachmann kann diese aufgrund seines allgemeinen Fachwissens ohne erfinderisches Zutun bestimmen.

Gemäß einer alternativen, bevorzugten Ausführungsform wird in Verfahrensschritt (D) als Biozid 2-Brom-2-nitropropan-1,3-diol und/oder 2,2-Dibrom-3-nitrilpropionamid hinzugegeben. Die Einsatzmenge der vorstehend angegebenen Biozide kann über weite Bereiche hinweg variieren. Ein Fachmann kann diese aufgrund seines allgemeinen Fachwissens ohne erfinderisches Zutun bestimmen.

### Die vorliegende Erfindung wird anhand des nachfolgend dargestellten Beispiels näher beschrieben:

Zu einer konservierungsmittelfreien Styrolacrylatdispersion wurden 20 ppm 5-Chlor-2-methylisothiazolin-3-on, mit einem Gehalt an 2-Methylisothiazolin-3-on von < 1Gew.-%, hinzugegeben. Die so konservierte Styrolacrylatdispersion wurde dann zur Herstellung einer Dispersionsfarbe auf Wasserbasis verwendet. Die hergestellte Farbe hatte folgende Zusammensetzung:
25,7 Gew.-% Wasser
0,2 Gew.-% Netz- und Dispergiermittel auf Acrylatbasis
0,2 Gew.- % Entschäumer auf Mineralölbasis
2,0 Gew.-% Wasserenthärter (Natriumpolyphosphat)
0,2 Gew.-% Ammoniak
4,0 Gew.-% Titanoxid (Pigment)
51,0 Gew.-% Calciumcarbonat (Füllstoff)
5,0 Gew.-% Talcum (Füllstoff)
0,4 Gew.-% % Celluloseether
2,0 Gew.-% organisches Lösemittel zur Erniedrigung der Mindestfilmbildungstemperatur
9,0 Gew.-% der mit 20 ppm 5-Chlor-2-methylisothiazolin-3-on konservierten Styrolacrylatdispersion
20 ppm 5-Chlor-2-methylisothiazolin-3-on, mit einem Gehalt an 2-Methylisothiazolin-3-on von < 1Gew.-%

Mit Hilfe von Mikrobiologischen Untersuchungen konnte in der Dispersionsfarbe kein mikrobielles Wachstum festgestellt werden, wohingegen in einzelnen Komponenten mikrobielles Wachstum nachweisbar war. Das hochwirksame 5-Chlor-2-methylisothiazolin-3-on war daher ausreichend, um die über die einzelnen Komponenten der Farbe eingeschleppten Mikroorganismen vollständig abzutöten.

Um aus der Dispersionsfarbe, die signifikante Mengen an 5-Chlor-2-methylisothiazolin-3-on enthielt, eine Farbe herzustellen, die für Allergiker im Hinblick auf darin enthaltenes 5-Chlor-2-methylisothiazolin-3-on und 2-Methylisothiazolin-3-on unbedenklich ist, herzustellen, wurden diese Isothiazolin-3-one durch Hinzugeben von 50 ppm Cystein, bezogen auf die Dispersionsfarbe zersetzt. Bereits nach 3 Stunden war in der Dispersionsfarbe mittels HPLC kein 5-Chlor-2-methylisothiazolin-3-on mehr nachweisbar.

Die so hergestellte Farbe war nun zwar durch die Verwendung des wirksamen Breitbandbiozids 5-Chlor-2-methylisothiazolin-3-on frei von Mikroorganismen, in Folge der Zersetzung des Biozids durch das Cystein jedoch anfällig bzgl. neu eingeschleppter Mikroorganismen, die während der Lagerung in die Farbe gelangen können.

Um die Farbe während der Lagerung gegen derartigen mikrobiellen Befall zu schützen, wurden daher zur Nachkonservierung, bezogen auf die Dispersionsfarbe 50 ppm 1,2-Benzisothiazolin-3-on, 100 ppm Zink-2-mercaptopyridin-N-oxid (Zinkpyrithion) und 10 ppm Zinkoxid hinzugegeben. Die so hergestellte Farbe wies eine Lagerstabilität von mindestens 6 Monaten auf.

## Patentansprüche

1. Verwendung einer Biozidzusammensetzung mit einem pH-Wert im Bereich von pH 1 bis pH 5, enthaltend:
a) von 0,25 bis 20 Gew.-% 5-Chlor-2-methyl-4-isothiazolin-3-on mit einem
Gehalt an 2-Methyl-4-isothiazolin-3-on im Bereich von 0 bis 2 Gew.-%, bezogen auf den Gesamtanteil des 5-Chlor-2-methyl-4-isothiazolin-3-ons,
b) ein Lösemittel, und
wenigstens einen Stabilisator ausgewählt aus der Gruppe c), d), e) und f):
c) von 0,1 bis 25 Gew.-% eines Metallnitrats
d) von 0,1 bis 500 ppm Kupferionen (Cu²⁺)
e) von 5 ppm bis 10.000 ppm eines Oxidationsmittels
f) von 5 ppm bis 1.000 ppm 2-Brom-2-nitropropan-1,3-diol und/oder Formaldehyd,
zur Verminderung mikrobiellen Befalls eines Produktes, **dadurch gekennzeichnet, dass** das Produkt ausgewählt ist aus der Gruppe bestehend aus Farben, Innenraumfarben, Lacken, Lasuren, Putzen, Innenputzen, Polymeremulsionen, Latices, Polymerdispersionen, Ligninsulfonaten, Kreideaufschlämmungen, mineralischen Slurries, keramischen Massen, Klebstoffen, Dichtstoffen, caseinhaltigen Produkten, stärkehaltigen Produkten, Bitumenemulsionen, Tensidlösungen, Kraftstoffen, Reinigungsmitteln, Pigmentpasten und Pigmentdispersionen, Tinten, lithografischen Flüssigkeiten, Verdickern, kosmetischen Produkten, Toilettenartikeln, Wasserkreisläufen, Flüssigkeiten bei der Papierverarbeitung, Flüssigkeiten bei der Lederherstellung, Flüssigkeiten bei der Textilherstellung, Bohr- und Schneidölen, hydraulischen Flüssigkeiten und Kühlschmierstoffen.

2. Verwendung nach Anspruch 1, **dadurch gekennzeichnet, dass** die Biozidzusammensetzung in das jeweiligen Produkte in einer Menge eingebracht wird, so dass die Menge an 5-Chlor-2-methyl-4-isothiazolin-3-on, bezogen auf das Produkt, im Bereich von 1 ppm bis 100 ppm liegt.

3. Verwendung nach Anspruch 1 oder 2, **dadurch gekennzeichnet, dass** das hinzugegebene 5-Chlor-2-methyl-4-isothiazolin-3 in einem nachfolgenden Verfahrensschritt mit Hilfe wenigstens einer 5-Chlor-2-methyl-4-isothiazolon-zersetzenden Verbindung zersetzt wird.

4. Verwendung nach Anspruch 3, **dadurch gekennzeichnet, dass** die wenigstens eine 5-Chlor-2-methyl-4-isothiazolon-zersetzenden Verbindung ausgewählt ist aus der Gruppe bestehend aus Cystein, Mercaptoethanol, Mercaptopropionsäure, Methylmercaptopropionat, Glutathion, Thioglycolat, Natriumthiosulfat, Natriumbisulfit, Pyrithion, Mercaptopyridin, Dithiothreitol, Mercaptoethansulfonat, und Natrium Formaldehyd Sulfoxylat.

5. Verwendung nach einem der Ansprüche 1 bis 4, **dadurch gekennzeichnet, dass** die Biozidzusammensetzung c) 2 bis 10 Gew.-% Magnesiumnitrat und/oder Natriumnitrat enthält.

6. Verwendung nach einem der Ansprüche 1 bis 4, **dadurch gekennzeichnet, dass** die Biozidzusammensetzung d) 1 bis 10 ppm Kupfer(II)-Ionen enthält.

7. Verwendung nach einem der Ansprüche 1 bis 4, **dadurch gekennzeichnet, dass** die Biozidzusammensetzung e) 10 bis 50 ppm wenigstens eines Oxidationsmittels enthält, das ausgewählt ist aus der Gruppe: Wasserstoffperoxid, Iodat, Periodat, Perchlorat, Chlorat und Bromat.

8. Verwendung nach einem der Ansprüche 1 bis 7, **dadurch gekennzeichnet, dass** die Biozidzusammensetzung als Lösemittel b) Wasser enthält.

9. Verwendung nach einem der Ansprüche 1 bis 8, **dadurch gekennzeichnet, dass** das Produkt ausgewählt ist aus der Gruppe bestehend aus Innenraumfarben, Innenputzen, Polymerdispersionen und kosmetischen Produkten.

## Claims

1. Use of a biocide composition having a pH in the range from pH 1 to pH 5, comprising:
a) from 0.25 to 20 wt% of 5-chloro-2-methyl-4-isothiazolin-3-one having a 2-methyl-4-isothiazolin-3-one content in the range from 0 to 2 wt%, based on the total fraction of the 5-chloro-2-methyl-4-isothiazolin-3-one,
b) a solvent, and
at least one stabilizer selected from the group c), d), e) and f):
c) from 0.1 to 25 wt% of a metal nitrate
d) from 0.1 to 500 ppm of copper ions (Cu²⁺)
e) from 5 ppm to 10 000 ppm of an oxidizing agent
f) from 5 ppm to 1000 ppm of 2-bromo-2-nitropropane-1,3-diol and/or formaldehyde,
for reducing microbial infestation of a product, **characterized in that** the product is selected from the group consisting of paints, interior paints, varnishes, stains, renders, interior plasters, polymer emulsions, latices, polymer dispersions, lignosulfonates, chalk suspensions, mineral slurries, ceramic masses, adhesives, sealants, products containing casein, products containing starch, bitumen emulsions, surfactant solutions, fuels, cleaning products, pigment pastes and pigment dispersions, liquid inks, lithographic liquids, thickeners, cosmetic products, toilet articles, water circuits, liquids in paper processing, liquids in leather production, liquids in textile production, drilling and cutting oils, hydraulic fluids, and cooling lubricants.

2. Use according to Claim 1, **characterized in that** the biocide composition is introduced into the respective products in an amount such that the amount of 5-chloro-2-methyl-4-isothiazolin-3-one, based on the product, is in the range from 1 ppm to 100 ppm.

3. Use according to Claim 1 or 2, **characterized in that** added 5-chloro-2-methyl-4-isothiazoline-3 is decomposed in a subsequent process step using at least one 5-chloro-2-methyl-4-isothiazolone-decomposing compound.

4. Use according to Claim 3, **characterized in that** the at least one 5-chloro-2-methyl-4-isothiazolone-decomposing compound is selected from the group consisting of cysteine, mercaptoethanol, mercaptopropionic acid, methyl mercaptopropionate, glutathione, thioglycolate, sodium thiosulfate, sodium bisulfite, pyrithione, mercaptopyridine, dithiothreitol, mercaptoethanesulfonate and sodium formaldehyde sulfoxylate.

5. Use according to any of Claims 1 to 4, **characterized in that** the biocide composition contains c) 2 to 10 wt% of magnesium nitrate and/or sodium nitrate.

6. Use according to any of Claims 1 to 4, **characterized in that** the biocide composition contains d) 1 to 10 ppm of copper(II) ions.

7. Use according to any of Claims 1 to 4, **characterized in that** the biocide composition contains e) 10 to 50 ppm of at least one oxidizing agent selected from the following group: hydrogen peroxide, iodate, periodate, perchlorate, chlorate and bromate.

8. Use according to any of Claims 1 to 7, **characterized in that** the biocide composition contains as solvent b) water.

9. Use according to any of Claims 1 to 8, **characterized in that** the product is selected from the group consisting of interior paints, interior plasters, polymer dispersions and cosmetic products.

## Revendications

1. Utilisation d'une composition de biocide dotée d'une valeur de pH dans la plage de pH 1 à pH 5, contenant :
a) de 0,25 à 20 % en poids de 5-chloro-2-méthyl-4-isothiazolin-3-one comportant une teneur en 2-méthyl-4-isothiazolin-3-one dans la plage de 0 à 2 % en poids, par rapport à la proportion totale de la 5-chloro-2-méthyl-4-isothiazolin-3-one,
b) un solvant, et
au moins un stabilisant choisi dans le groupe c), d), e) et f) :
c) de 0,1 à 25 % en poids d'un nitrate métallique
d) de 0,1 à 500 ppm d'ions cuivre (Cu²⁺)
e) de 5 ppm à 10 000 ppm d'un agent d'oxydation
f) de 5 ppm à 1 000 ppm de 2-bromo-2-nitropropane-1,3-diol et/ou de formaldéhyde,
pour la réduction de l'infestation microbienne d'un produit, **caractérisée en ce que** le produit est choisi dans le groupe constitué par des peintures, des peintures d'espace intérieur, des vernis, des lasures, des enduits, des enduits intérieurs, des émulsions de polymères, des latex, des dispersions de polymères, des sulfonates de lignine, des boues de craie, des suspensions minérales, des masses de céramiques, des adhésifs, des matières d'étanchéité, des produits contenant de la caséine, des produits contenant de l'amidon, des émulsions de bitume, des solutions de tensioactifs, des carburants, des produits de nettoyage, des pâtes pigmentaires et des dispersions de pigments, des encres, des liquides lithographiques, des épaississants, des produits cosmétiques, des articles de toilette, des circuits d'eau, des liquides de traitement du papier, des liquides de fabrication du cuir, des liquides de fabrication de textiles, des huiles de forage et de découpe, des liquides hydrauliques et des lubrifiants réfrigérants.

2. Utilisation selon la revendication 1, **caractérisée en ce que** la composition de biocide est introduite dans les produits respectifs en une quantité telle que la quantité de 5-chloro-2-méthyl-4-isothiazolin-3-one se situe dans la plage de 1 ppm à 100 ppm, par rapport au produit.

3. Utilisation selon la revendication 1 ou 2, **caractérisée en ce que** la 5-chloro-2-méthyl-4-isothiazoline-3 ajoutée est décomposée, dans une étape de procédé ultérieure, à l'aide d'au moins un composé de décomposition de 5-chloro-2-méthyl-4-isothiazolone.

4. Utilisation selon la revendication 3, **caractérisée en ce que** l'au moins un composé de décomposition de 5-chloro-2-méthyl-4-isothiazolone est choisi dans le groupe constitué par la cystéine, le mercaptoéthanol, l'acide mercaptopropionique, le mercaptopropionate de méthyle, le glutathion, le thioglycolate, le thiosulfate de sodium, le bisulfite de sodium, la pyrithione, la mercaptopyridine, le dithiothréitol, le mercaptoéthanesulfonate, et le sulfoxylate de formaldéhyde de sodium.

5. Utilisation selon l'une quelconque des revendications 1 à 4, **caractérisée en ce que** la composition de biocide contient c) 2 à 10 % en poids de nitrate de magnésium et/ou de nitrate de sodium.

6. Utilisation selon l'une quelconque des revendications 1 à 4, **caractérisée en ce que** la composition de biocide contient d) 1 à 10 ppm d'ions cuivre(II).

7. Utilisation selon l'une quelconque des revendications 1 à 4, **caractérisée en ce que** la composition de biocide contient e) 10 à 50 ppm d'au moins un agent d'oxydation qui est choisi dans le groupe : peroxyde d'hydrogène, iodate, periodate, perchlorate, chlorate et bromate.

8. Utilisation selon l'une quelconque des revendications 1 à 7, **caractérisée en ce que** la composition de biocide contient de l'eau en tant que solvant b).

9. Utilisation selon l'une quelconque des revendications 1 à 8, **caractérisée en ce que** le produit est choisi dans le groupe constitué par des peintures d'espace intérieur, des enduits intérieurs, des dispersions de polymères et des produits cosmétiques.
